# FASCICULE DE BREVET EUROPEEN

(11) **EP 1 227 034 B1**
(45) Date de publication et mention de la délivrance du brevet: **28.02.2007**
(21) Numéro de dépôt: 02290159.9
(22) Date de dépôt: 23.01.2002
(51) Int. Cl.: B64C 1/14

(54) **Dispositif d'articulation d'un battant de porte d'aéronef et porte d'aéronef integrant un tel dispositif**
Gelenkvorrichtung für ein Flugzeugtürblatt und Flugzeugtür mit einer solchen Vorrichtung
Hinge device for an aircraft door wing and aircraft door incorporating such a device

(30) Priorité: 25.01.2001 FR 0101000
(43) Date de publication de la demande: 31.07.2002
(73) Titulaire: AIRBUS France, 31060 Toulouse (FR)
(72) Inventeur: Dazet, Francis, 31140 Saint Alban (FR); Rouyre, Francois, 31700 Cornebarrieu (FR)
(74) Mandataire: Poulin, Gérard

(56) Documents cités:
- EP-A- 0 317 037
- US-A- 5 289 615

## Description

### Domaine technique

L'invention concerne principalement un dispositif d'articulation d'un battant de porte d'aéronef sur un dormant de ladite porte. Un tel dispositif permet de définir la trajectoire suivie par le battant de la porte lors de son ouverture et de sa fermeture. Il permet aussi de contrôler l'orientation de la porte, afin que cette orientation reste sensiblement constante lorsque la porte se déplace selon la trajectoire précitée.

L'invention a également pour objet une porte d'aéronef, comprenant notamment un battant et un dormant reliés l'un à l'autre par un dispositif d'articulation de ce type.

Une porte incorporant un dispositif d'articulation conforme à l'invention peut être utilisée sur tout type d'aéronef. Une application privilégiée concerne les avions gros porteurs destinés au transport de passagers.

### Etat de la technique

De façon classique, une porte d'aéronef comprend un dormant lié au fuselage de l'aéronef et délimitant une ouverture, généralement rectangulaire, permettant notamment aux passagers et à l'équipage d'entrer et de sortir de l'aéronef. La porte comprend également un battant, relié au dormant par un dispositif d'articulation. Ce dispositif définit la trajectoire suivie par le battant lorsqu'il se déplace entre un état d'ouverture et un état de fermeture. Le dispositif d'articulation permet aussi de contrôler l'orientation de la porte afin que cette orientation reste inchangée lorsque la porte se déplace entre son état ouvert et son état fermé, ou inversement.

Une porte d'aéronef comprend aussi des moyens de verrouillage, aptes à être manoeuvrés manuellement par l'équipage ou par le personnel des aéroports, pour commander selon le cas un verrouillage ou un déverrouillage du battant sur le dormant.

Une porte d'aéronef comprend en outre des butées complémentaires appartenant respectivement au dormant et au battant de la porte. Lorsque la porte est fermée, les butées du battant sont en appui vers l'extérieur contre les butées du dormant. La pressurisation régnant à l'intérieur du fuselage contribue à maintenir les butées en appui mutuel.

Avant que le battant ne soit ouvert en suivant la trajectoire définie par le dispositif d'articulation, le battant de la porte doit donc être déplacé par rapport au dormant, parallèlement à lui-même, afin de décaler les butées du battant par rapport à celles du dormant. Ce déplacement est habituellement assuré par la mise en oeuvre des moyens de verrouillage dans le sens du déblocage de la porte. Habituellement, le déplacement du battant de la porte s'effectue alors vers le haut, suivant la courbure du fuselage et a pour effet de décaler dans le même sens les butées formées sur ce battant par rapport à celles portées par le dormant.

Comme l'illustre notamment le document US-A-5 289 615, un dispositif d'articulation d'un battant de porte d'aéronef comprend généralement un bras unique, coudé vers l'intérieur de l'aéronef. Ce bras est articulé par une première extrémité sur le dormant de la porte et par son extrémité opposée sur le battant de la porte.

Dans le document US-A-5 289 615, le dispositif d'articulation comprend de plus un système d'orientation de la porte intégrant une courroie crantée, un câble ou une chaîne sans fin montée sur le bras. Plus précisément, la courroie crantée, le câble ou la chaîne sans fin chemine entre des poulie ou des roues dentées montées sur des arbres centrés respectivement sur les axes d'articulation reliant le bras au dormant et au battant. Des poulies ou des galets de guidage sont également montés sur la partie coudée du bras, pour permettre à la courroie crantée, au câble ou à la chaîne sans fin de suivre approximativement les contours du bras.

Ce dispositif est complété par des biellettes reliant respectivement chacun des arbres montés aux extrémités du bras au dormant et au battant de la porte.

Dans un tel dispositif d'articulation de battant de porte d'aéronef, la trajectoire suivie par le battant lors de son ouverture ou de sa fermeture est une trajectoire circulaire. Par conséquent, dès que le battant de la porte commence à s'écarter vers l'extérieur du fuselage, il se déplace aussi parallèlement à lui-même, vers l'avant ou vers l'arrière, dans une proportion qui augmente rapidement au fur et à mesure que le battant s'écarte.

Sur la plupart des aéronefs, un toboggan d'évacuation de secours est logé, à l'état replié, dans un boîtier prévu à cet effet dans le bas du battant de la porte, à l'intérieur de l'aéronef. Ce boîtier forme un renflement dont les dimensions et la forme sont conditionnées par la taille du toboggan et par la nécessité d'éviter toute interférence entre le battant et le dormant de la porte lors de son ouverture et de sa fermeture.

Sur un avion très gros porteur, tel qu'un avion à deux ponts superposés, certaines portes doivent être équipées de toboggans de très grande longueur. C'est notamment le cas des portes équipant le pont supérieur, dont les toboggans doivent prendre en compte la hauteur du pont supérieur par rapport au sol, en cas d'accident. Le volume occupé par de tels toboggans à l'état replié conduit à placer dans le bas des portes correspondantes des boîtiers dont l'encombrement est tel qu'il n'est pratiquement pas possible de l'implanter sur une porte équipée d'un dispositif d'articulation traditionnel tel qu'illustré notamment dans le document US-A-5 289 615. En effet, quelle que soit la forme donnée au boîtier, la trajectoire circulaire imposée par le dispositif d'articulation conduirait inévitablement à une interférence entre le boîtier porté par le battant de la porte et le dormant de celle-ci, lors des manoeuvres d'ouverture et de fermeture.

Par ailleurs, du fait de la courbure présentée par le fuselage de l'aéronef au niveau du pont supérieur d'un avion très gros porteur à deux ponts superposés, le mouvement de montée du battant habituellement effectué suivant la courbure du fuselage, par les moyens de verrouillage de la porte, pour décaler les butées du battant par rapport à celles du dormant avant de procéder à l'ouverture de la porte, impose une course de montée relativement importante du battant de la porte. Cette course de montée peut notamment atteindre environ 70 mm. Cela pose un certain nombre de problèmes, par rapport aux portes d'aéronefs existantes, dans lesquelles ce déplacement est sensiblement plus limité.

### Exposé de l'invention

L'invention a précisément pour objet un dispositif d'articulation d'un battant de porte d'aéronef dont la conception originale lui permet d'assurer l'ouverture et la fermeture dudit battant sans risque d'interférence avec le dormant de la porte, même dans le cas où ce battant doit supporter un boîtier particulièrement encombrant servant à loger, à l'état replié, un toboggan de très grandes dimensions.

Conformément à l'invention, ce résultat est obtenu au moyen d'un dispositif d'articulation d'un battant de porte d'aéronef sur un dormant de ladite porte, selon la revendication 1.

Dans un mode de réalisation préféré de l'invention, le mécanisme reliant le dormant au battant définit une trajectoire sensiblement elliptique, dont le grand axe est sensiblement perpendiculaire au battant.

Avantageusement, le quatrième axe est de préférence décalé vers l'extérieur de l'aéronef par rapport au premier axe et le cinquième axe est décalé vers l'extérieur de l'aéronef et vers le premier axe par rapport au deuxième axe.

De préférence, les décalages entre le premier et le quatrième axes et entre le deuxième et le cinquième axes sont sensiblement égaux.

Avantageusement, le levier de commande a alors une longueur inférieure à celle du bras principal d'une valeur sensiblement égale aux décalages entre le premier et le quatrième axes et entre le deuxième et le cinquième axes.

Dans le mode de réalisation préféré de l'invention, les moyens d'orientation du battant comprennent avantageusement au moins une première biellette dont une extrémité est solidaire d'un premier arbre supportant le bras principal autour du premier axe et dont l'autre extrémité est apte à être articulée sur le dormant, au moins une deuxième biellette dont une extrémité est solidaire d'un deuxième arbre monté tournant sur le bras secondaire autour du troisième axe et dont l'autre extrémité est apte à être articulée sur le battant, et des moyens de liaison synchrone interposés entre le premier arbre et le deuxième arbre de façon à maintenir constante l'orientation angulaire du deuxième arbre.

Les moyens de liaison synchrone peuvent notamment comprendre au moins une première courroie sans fin portée par le bras principal et cheminant entre des poulies liées respectivement en rotation au premier arbre et à un troisième arbre monté tournant autour du deuxième axe, et au moins une deuxième courroie sans fin portée par le bras secondaire et cheminant entre des poulies reliées respectivement en rotation au troisième arbre et au deuxième arbre.

Pour faciliter le mouvement d'ouverture de la porte, le bras principal a généralement une forme coudée vers l'intérieur de l'aéronef. Il supporte alors avantageusement, de façon tournante, un quatrième arbre au niveau de sa partie coudée. Dans ce cas, au moins deux premières courroies sans fin cheminent respectivement entre des poulies portées par le premier et le quatrième arbre et entre des poulies portées par le quatrième et le troisième arbres.

L'invention a également pour objet une porte d'aéronef comportant un dormant lié au fuselage de l'aéronef et un battant articulé sur le dormant par un dispositif d'articulation tel que défini ci-dessus.

De façon habituelle, le battant et le dormant comportent des butées complémentaires aptes à être en appui mutuel lorsque le battant est dans son état de fermeture. De plus, la porte comprend des moyens de verrouillage permettant d'en assurer le blocage et le déblocage. Afin de réduire les déplacements et de simplifier les mécanismes, ces moyens de verrouillage sont avantageusement aptes à commander une descente du battant permettant de décaler vers le bas les butées du battant par rapport à celles du dormant, lors d'un déblocage des moyens de verrouillage, préalablement à une ouverture du battant selon la trajectoire précitée, et inversement.

### Brève description des dessins

On décrira à présent, à titre d'exemple non limitatif, un mode de réalisation préféré de l'invention, en se référant aux dessins annexés, dans lesquels :
- la figure 1 est une vue en perspective qui représente très schématiquement une porte d'aéronef, dans son état de fermeture, observée depuis l'intérieur de la cabine ;
- la figure 2 est une vue en perspective qui représente la porte de la figure 1, dans son état de pleine ouverture, observée depuis l'extérieur de l'aéronef ;
- la figure 3 est une vue en perspective qui représente à plus grande échelle le dispositif d'articulation du battant de la porte, selon un mode de réalisation préféré de l'invention ;
- les figures 4A à 4C sont des vues de dessus illustrant schématiquement différentes positions relatives du battant de la porte, obtenues grâce au dispositif d'articulation de la figure 3 ; et
- la figure 5 illustre schématiquement le mouvement de descente du battant de la porte commandé par les moyens de verrouillage, lors de leur déblocage précédant l'ouverture du battant.

### Description détaillée d'un mode de réalisation préféré de l'invention

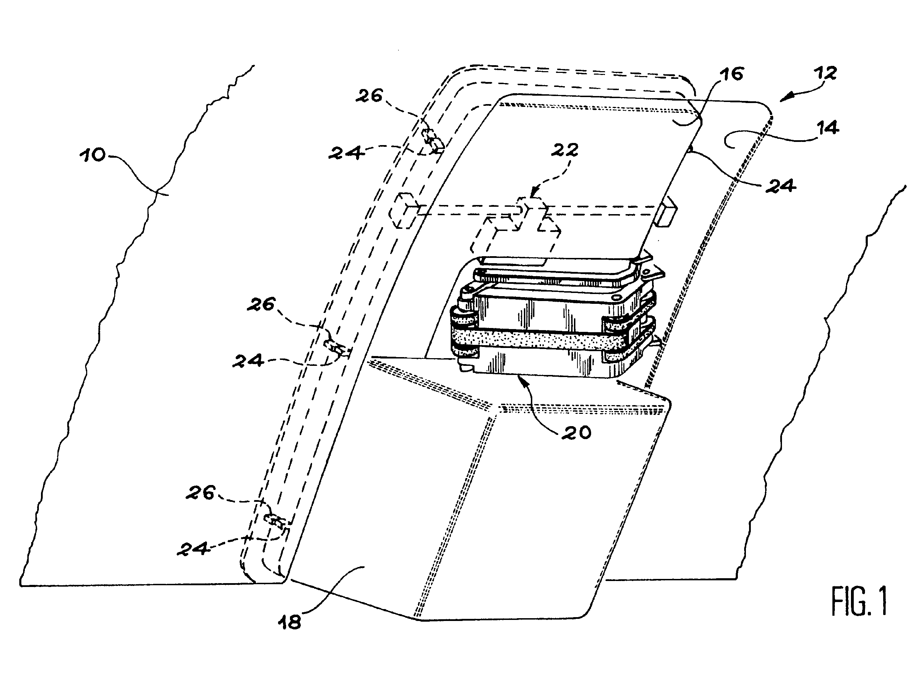

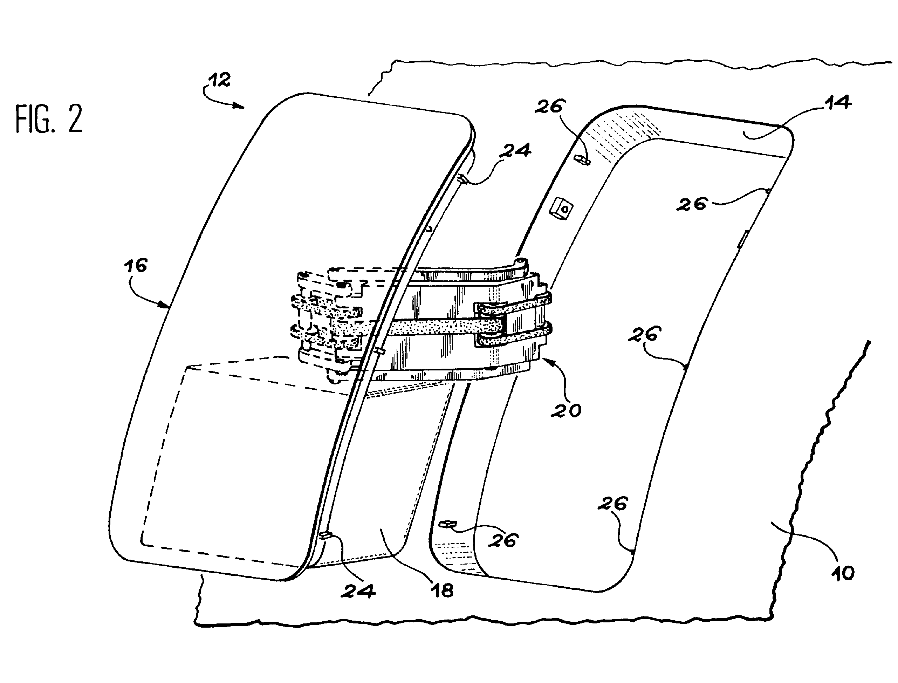

Sur les figures 1 et 2, la référence 10 désigne le fuselage d'un aéronef. Plus précisément, la partie du fuselage 10 illustrée sur les figures 1 et 2 intègre une porte 12 permettant aux passagers d'accéder à la cabine.

De façon classique, la porte 12 comprend un dormant 14 solidaire du fuselage 10 et délimitant intérieurement une ouverture sensiblement rectangulaire. Lorsque la porte 12 est fermée, cette ouverture est obturée par un battant 16 de la porte 12.

Sur sa face tournée vers l'intérieur de l'aéronef et dans sa partie basse, le battant 16 de la porte 12 comprend un boîtier 18 qui fait saillie vers l'intérieur de la cabine. Ce boîtier 18 sert à loger un toboggan d'évacuation de secours de l'aéronef. L'invention est particulièrement adaptée, bien que non limitée, au cas où le boîtier 18 est très volumineux, de façon à loger un toboggan de très grande taille.

Comme l'illustrent les figures 1 et 2, le battant 16 de la porte 12 est relié à l'un des montants du dormant 14 par un dispositif d'articulation 20 dont la conception originale sera décrite en détail par la suite. Le dispositif d'articulation 20 a principalement pour fonction de définir la trajectoire suivie par le battant 16 à l'extérieur de l'aéronef, lors de l'ouverture et de la fermeture de la porte 12. Le dispositif d'articulation 20 a aussi pour fonction de maintenir sensiblement constante l'orientation du battant 16 lors de son déplacement selon la trajectoire précitée. En d'autres termes, le déplacement du battant 16 selon cette trajectoire est tel qu'il reste toujours parallèle à lui-même ainsi qu'à la partie du fuselage 10 attenante à la porte 12.

De façon classique, la porte 12 est également équipée de moyens de verrouillage désignés globalement par la référence 22 sur la figure 1. Ces moyens de verrouillage 22 permettent de commander le blocage et le déblocage du battant 16 par rapport au dormant 14, lorsque la porte est en position fermée. Ils ne font pas partie de l'invention et peuvent être réalisés de manière quelconque, selon des techniques bien connues de l'homme du métier. Il n'en sera pas fait de description détaillée.

Enfin, le battant 16 et le dormant 14 de la porte 12 sont équipés de butées complémentaires désignées respectivement par les références 24 (figure 1) et 26 (figure 2). Les butées 26 sont habituellement placées le long des montants sensiblement verticaux du dormant 14 de la porte. Lorsque la porte est fermée comme l'illustre la figure 1, les butées 24 qui équipent le battant 16 sont placées en face des butées 26 qui équipent le dormant 14 et en appui contre celles-ci sous l'effet de la pressurisation régnant dans la cabine. En d'autres termes, les butées 24 du battant 16 sont décalées vers l'intérieur de l'aéronef par rapport aux butées 26 du dormant 14 et appliquées contre celles-ci par la pression régnant à l'intérieur de la cabine.

Les moyens de verrouillage 22 sont conçus pour commander un déplacement du battant 16, respectivement vers le haut et vers le bas, parallèlement à lui-même, lors des opérations de blocage et de déblocage de la porte. Le déplacement du battant 16 vers le haut permet d'amener les butées 24 en face des butées 26 lors du blocage de la porte. A l'inverse, le déplacement du battant 24 vers le bas permet de décaler les butées 24 par rapport aux butées 26 lors du déblocage de la porte. Ce mouvement du battant 16 précède l'ouverture de la porte selon la trajectoire définie par le dispositif d'articulation 20.

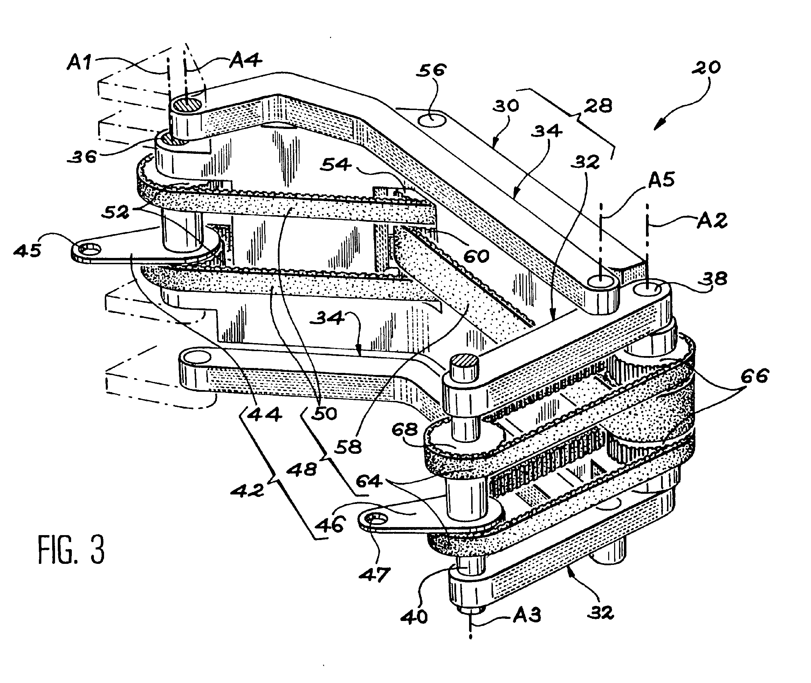

On décrira à présent en détail le dispositif d'articulation 20 conforme à l'invention, en se référant notamment à la figure 3.

Le dispositif d'articulation 20 selon l'invention comprend principalement un mécanisme 28 assurant la liaison entre le dormant 14 et le battant 16 de la porte, de façon à définir une trajectoire de déplacement du battant 16 située dans un plan sensiblement horizontal et présentant une courbure évolutive. Plus précisément, cette trajectoire comprend principalement une première partie, de relativement grand rayon de courbure et une deuxième partie, dont le rayon de courbure est relativement petit par rapport à celui de la première partie. La première partie de la trajectoire est sensiblement perpendiculaire au battant 16 de la porte et inclut l'état de fermeture dudit battant. La deuxième partie de la trajectoire est sensiblement parallèle au battant et inclut l'état de pleine ouverture de celui-ci. Cet agencement permet au boîtier 18 dans lequel est placé le toboggan de rentrer et de sortir de la cabine de l'aéronef sans risquer d'interférer avec le dormant 14 de la porte.

En d'autres termes, le mécanisme de liaison 28 est conçu de façon à engendrer une trajectoire sensiblement elliptique dont le grand axe est sensiblement horizontal et perpendiculaire au battant 16 de la porte.

Comme l'illustre plus précisément la figure 3, dans le mode de réalisation préféré de l'invention le mécanisme 28 comprend un bras principal 30, deux bras secondaires 32 et deux leviers de commande 34.

Le bras principal 30 présente une forme coudée vers l'intérieur de l'aéronef. Le bras principal 30 est une pièce massive, disposée sensiblement horizontalement. L'une de ses extrémités est articulée sur l'un des montants du dormant 14, de façon à pouvoir pivoter autour d'un premier axe A1 sensiblement vertical. Ce premier axe A1 est matérialisé par un arbre 36.

Les deux bras secondaires 32 sont rectilignes et sensiblement horizontaux. Ils sont tous deux de même longueur et plus courts que le bras principal 30. Les bras secondaires 32 sont articulés par une de leurs extrémités à l'extrémité opposée du bras principal 30, autour d'un deuxième axe A2 parallèle au premier axe A1. Ce deuxième axe A2 est matérialisé par un arbre 38.

Les extrémités opposées des bras secondaires 32 sont articulés sur le battant 16 de la porte par un troisième axe A3 parallèle aux axes A1 et A2. Ce troisième axe A3 est matérialisé par un arbre 40.

Les leviers de commande 34 sont disposés sensiblement horizontalement au-dessus et en dessous du bras principal 30 et ils présentent approximativement une forme coudée pour ne pas interférer avec le dormant en position ouverte. La longueur des leviers 34 est légèrement inférieure à celle du bras principal 30. Une première extrémité des leviers de commande 34 est articulée sur le montant du dormant 14 portant le bras principal 30 par un quatrième axe A4 situé à proximité du premier axe A1 d'articulation du bras principal 30 sur ce même montant. Plus précisément, le quatrième axe A4 est décalé vers l'extérieur de l'aéronef par rapport au premier axe A1.

L'extrémité opposée de chacun des leviers de commande 34 est articulée sur l'un des bras secondaires 32 par un cinquième axe A5 situé à proximité du deuxième axe A2 d'articulation des bras secondaires 32 sur le bras principal 30. Plus précisément, l'agencement est tel que le cinquième axe A5 est décalé à la fois vers l'extérieur de l'aéronef et vers le premier axe A1 par rapport au deuxième axe A2, quel que soit l'état de la porte 12. En outre, les décalages entre les axes A1 et A4 et entre les axes A2 et A5 sont sensiblement égaux et correspondent approximativement à la différence de longueur entre le bras principal 20 et les leviers de commande 34.

Le dispositif d'articulation 20 conforme à l'invention comprend de plus des moyens d'orientation 42, qui sont associés au mécanisme 28 afin de maintenir sensiblement constante l'orientation du battant 16 lorsqu'il se déplace entre son état de fermeture et son état de pleine ouverture.

Dans le mode de réalisation illustré sur la figure 3, les moyens d'orientation 42 comprennent une première biellette 44 solidaire de l'arbre 36, une deuxième biellette 46 solidaire de l'arbre 40 et des moyens de liaison synchrone 48 interposés entre les arbres 36 et 40.

De façon plus précise, l'extrémité de la première biellette 44 opposée au premier arbre 36 est reliée au montant correspondant du dormant 14 de la porte par une tige verticale (non représentée) reçue dans un trou circulaire 45 formé dans la biellette 44. De façon comparable, l'extrémité de la deuxième biellette 46 opposée à l'arbre 40 est reliée au battant 16 de la porte par une tige verticale (non représentée) reçue dans un trou circulaire 47 formé dans la biellette 46.

Par ailleurs, les moyens de liaison synchrone 48 relient les arbres 36 et 40 de façon telle que l'orientation spatiale de la deuxième biellette 46 reste constante quelle que soit l'attitude du mécanisme 28. En d'autres termes, la deuxième biellette 46 reste en permanence parallèle à la première biellette 44, qui est elle-même fixe puisque ses deux extrémités sont liées en rotation au montant du dormant 14. Par conséquent, le battant 16 de la porte se déplace parallèlement à lui-même ainsi qu'à la partie attenante du fuselage 10 de l'aéronef.

Dans le mode de réalisation illustré sur la figure 3, les moyens de liaison synchrone 48 comprennent deux courroies crantées sans fin 50, qui cheminent entre des roues dentées 52 et 54 solidaires respectivement de l'arbre 36 et d'un arbre 56 monté tournant dans la partie de coude du bras principal 30, parallèlement aux axes A1 à A5. Les moyens de liaison synchrone 48 comprennent également une courroie crantée sans fin 58 qui chemine entre une roue dentée 60 et une roue dentée (non représentée) solidaires respectivement de l'arbre 56 et de l'arbre 38 ainsi que deux courroies crantées sans fin 64 qui cheminent entre des roues dentées 66 et 68 solidaires respectivement des arbres 38 et 40.

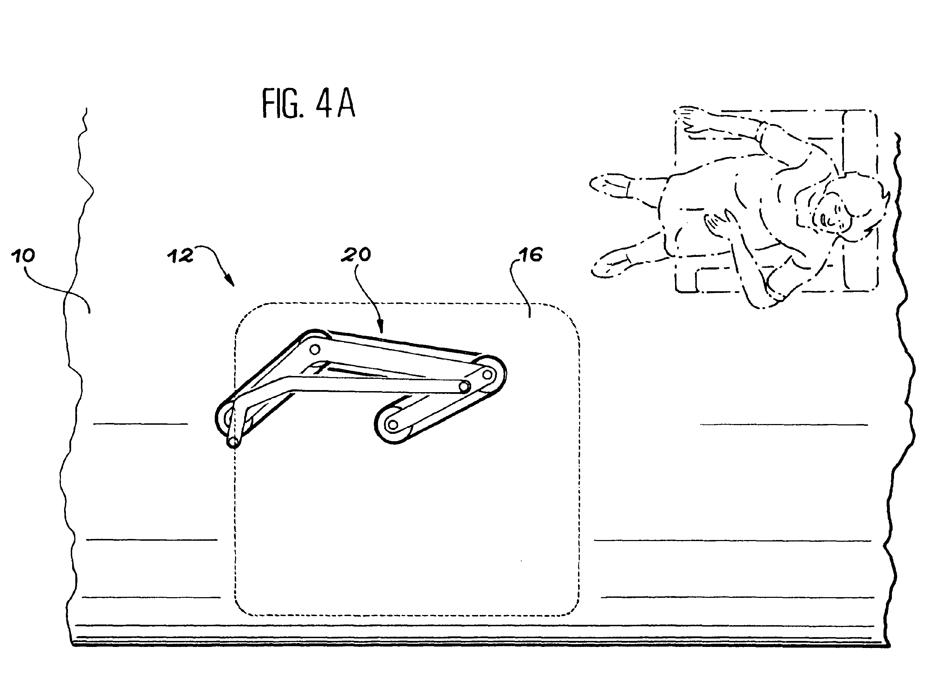

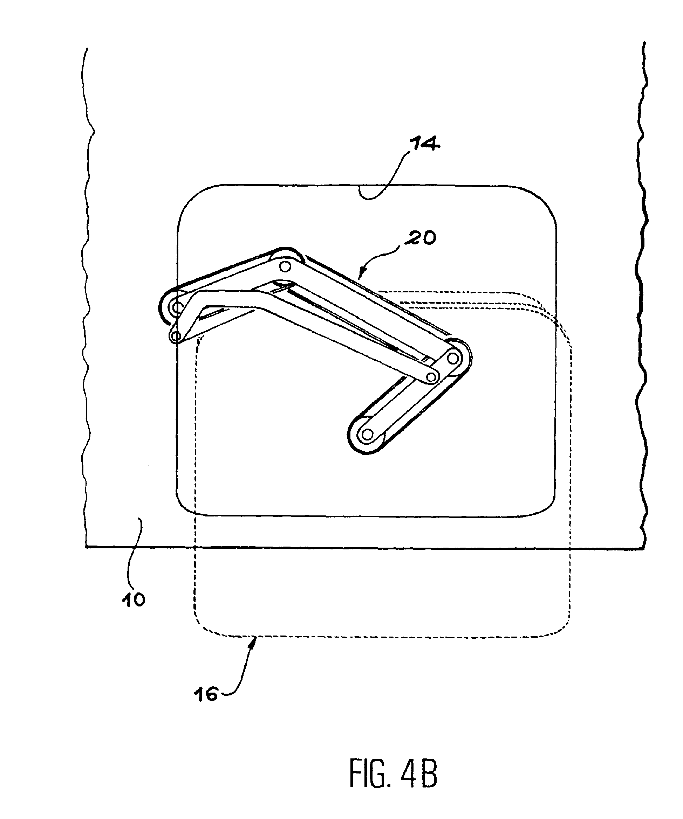

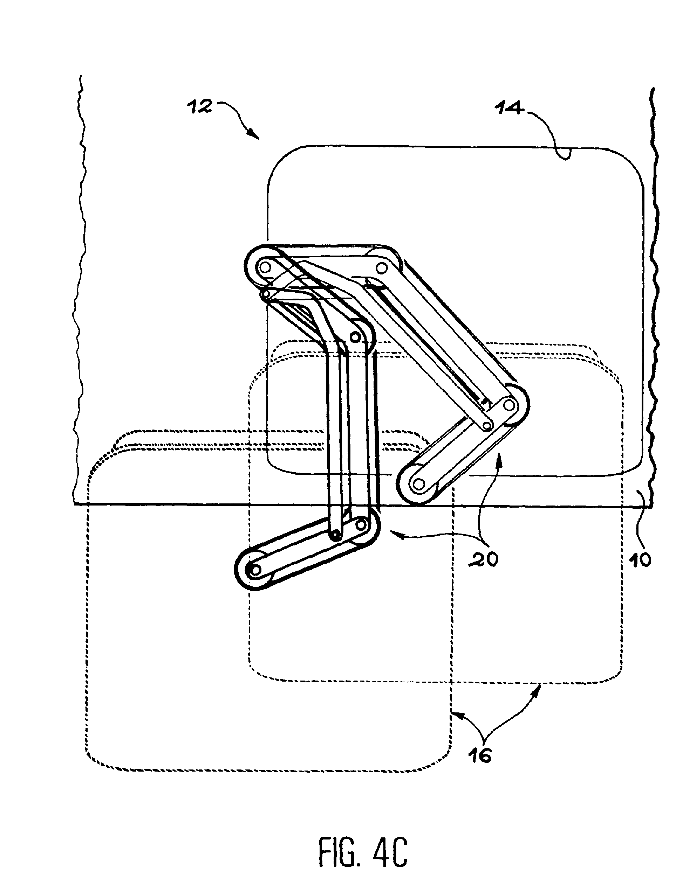

Dans le mode de réalisation de l'invention qui vient d'être décrit en référence à la figure 3, le mécanisme 28 permet de déplacer le battant 16 de la porte selon une trajectoire sensiblement elliptique, dont différentes positions sont illustrées schématiquement sur les figures 4A à 4C, lorsque le battant 16 est déplacé de son état de fermeture vers son état de pleine ouverture, et inversement. Plus précisément, le grand axe de l'ellipse formée par cette trajectoire est sensiblement perpendiculaire au battant 16 de la porte. Par conséquent, la première partie de la trajectoire incluant l'état de fermeture du battant 16 illustré sur la figure 4A, présente un grand rayon de courbure et est sensiblement perpendiculaire à ce battant (voir aussi la position illustrée sur la figure 4B et la position illustrée sur la droite de la figure 4C). Cela permet au boîtier 18 dans lequel est logé le toboggan de franchir le seuil de la porte sans risquer d'interférer avec le dormant 14, même lorsque ce boîtier est de très grande taille.

La deuxième partie de la trajectoire suivie par le battant 16 présente un plus petit rayon de courbure et est au contraire sensiblement parallèle au battant. Elle inclut la position de pleine ouverture de la porte, ainsi que la position illustrée à gauche sur la figure 4C. Dans cette partie de la trajectoire, le battant 16 de la porte se déporte rapidement vers l'avant ou vers l'arrière, de façon à dégager complètement l'ouverture délimitée par le dormant 14, pour permettre l'entrée et la sortie des passagers.

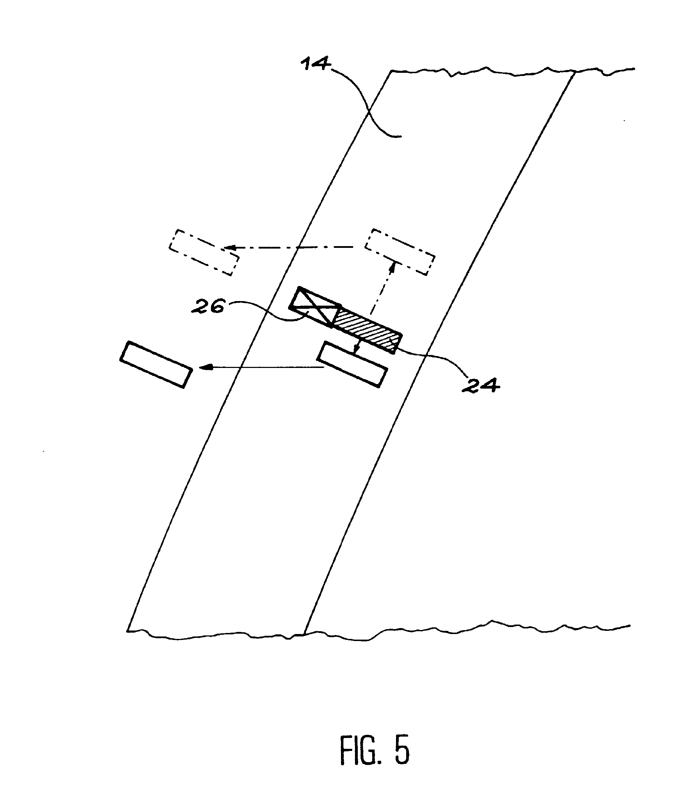

Selon un perfectionnement avantageux de l'invention, illustré sur la figure 5, qui s'applique notamment au cas où la porte 12 est implantée dans la partie supérieure du fuselage 10, de sorte qu'elle est fortement inclinée vers l'intérieur de l'aéronef dans sa partie haute, les moyens de verrouillage 22 de la porte sont agencés de façon telle que leur actionnement dans le sens du déblocage se traduit par une descente limitée du battant 16 par rapport au dormant 14. Cette descente peut notamment s'effectuer sur une distance d'environ 25 mm. Bien entendu, les moyens de verrouillage 22 commandent un mouvement inverse du battant 16, c'est-à-dire vers le haut, lorsqu'ils sont actionnés dans le sens du blocage de la porte.

Cet agencement particulier permet de réduire très sensiblement la course de déplacement du battant 16 de la porte nécessaire pour décaler les butées 24 équipant ce battant par rapport aux butées 26 équipant le dormant 14, avant que la porte ne puisse être ouverte. En effet, compte tenu de l'inclinaison des butées 24 et 26 découlant de la courbure présentée par le fuselage 10 à ce niveau, un déplacement classique du battant 16 vers le haut précédant l'ouverture de la porte nécessiterait un déplacement environ double dudit battant, comme on l'a illustré schématiquement en traits mixtes sur la figure 4.

Il est à noter que le dispositif d'articulation 20 est conçu pour prendre en compte les mouvements de descente et de montée du battant 16 qui se produisent lors du déverrouillage et du verrouillage de la porte. Ainsi, et uniquement à titre d'exemple, l'arbre 40 ainsi que la tige (non représentée) passant par le trou 47 peuvent être liés au battant 16 de la porte par un mécanisme coulissant et à rotule, autorisant le déplacement relatif précité entre le battant 16 et le montant 14.

Bien entendu, l'invention n'est pas limitée au mode de réalisation qui vient d'être décrit à titre d'exemple. Ainsi, on comprendra notamment que les moyens de liaison synchrone à courroies crantées et roues dentées qui ont été décrits peuvent être remplacés par tout mécanisme équivalent tel que des systèmes à chaînes et roues dentées ou à câbles et poulies ou une timonerie de bielles et de leviers. De façon comparable, le mécanisme servant à définir la trajectoire suivie par le battant de la porte peut être constitué par tout mécanisme apte à définir une trajectoire sensiblement elliptique.

## Revendications

1. Dispositif d'articulation (20) d'un battant (16) de porte d'aéronef (12) sur un dormant (14) de ladite porte, ledit dispositif comprenant un mécanisme (28) reliant le dormant (14) au battant (16), pour définir une trajectoire suivie par ledit battant, à l'extérieur de l'aéronef, lors de son ouverture et de sa fermeture, et des moyens d'orientation (42), aptes à maintenir une orientation sensiblement constante du ballant (16) lors de son déplacement selon ladite trajectoire, **caractérisé en ce que** ledit mécanisme (28) définit une trajectoire de courbure évolutive, comprenant principalement une première partie de relativement grand rayon de courbure et sensiblement perpendiculaire au battant (16), incluant un état de fermeture dudit battant, et une deuxième partie de relativement petit rayon de courbure et sensiblement parallèle audit battant, incluant un état de pleine ouverture du battant (16), sensiblement parallèle audit battant, et **en ce que** ledit mécanisme (28) comprend un bras principal (30), apte à être articulé sur le dormant (14) par un premier axe (A1), au moins un bras secondaire (32) articulé sur le bras principal par un deuxième axe (A2) et apte à être articulé sur le battant (16) par un troisième axe (A3), et au moins un levier de commande (34) apte à être articulé sur le dormant par un quatrième axe (A4) situé à proximité du premier axe (A1) et articulé sur le bras secondaire par un cinquième axe (A5) situé à proximité du deuxième axe (A2).

2. Dispositif selon la revendication 1, dans lequel ledit mécanisme (28) définit une trajectoire sensiblement elliptique, dont un grand axe est sensiblement perpendiculaire au battant (16).

3. Dispositif selon l'une quelconque des revendications 1 et 2, dans lequel le quatrième axe (A4) est décalé vers l'extérieur de l'aéronef par rapport au premier axe (A1) et le cinquième axe (A5) est décalé vers l'extérieur de l'aéronef et vers le premier axe (A1), par rapport au deuxième axe (A2).

4. Dispositif selon la revendication 3, dans lequel les décalages entre le premier et le quatrième axes (A1, A4) et entre le deuxième et le cinquième axes (A2, A5) sont sensiblement égaux.

5. Dispositif selon la revendication 4, dans lequel le levier de commande (34) a une longueur inférieure à celle du bras principal (30) d'une valeur sensiblement égale aux décalages entre le premier et le quatrième axes (A1,A4) et entre le deuxième et le cinquième axes (A2,A5).

6. Dispositif selon l'une quelconque des revendications 1 à 5, dans lequel les moyens d'orientation (42) comprennent au moins une première biellette (44) dont une extrémité est solidaire d'un premier arbre (36) supportant le bras principal (30) autour du premier axe (A1) et dont l'autre extrémité est apte à être articulée sur le dormant (14), au moins une deuxième biellette (46) dont une extrémité est solidaire d'un deuxième arbre (40) monté tournant sur le bras secondaire (32) autour du troisième axe (13) et dont l'autre extrémité est apte à être articulée sur le battant (16), et des moyens de liaison synchrone (48) interposés entre le premier arbre (36) et le deuxième arbre (40) de façon à maintenir constante l'orientation angulaire du deuxième arbre.

7. Dispositif selon la revendication 6, dans lequel les moyens de liaison synchrone (48) comprennent au moins une première courroie sans fin (50,58) portée par le bras principal (30) et cheminant entre des poulies (52) liées respectivement en rotation au premier arbre (36) et à un troisième arbre (38) monté tournant autour du deuxième axe (A2), et au moins une deuxième courroie sans fin (64) portée par le bras secondaire (32) et cheminant entre des poulies (66,68) liées respectivement en rotation au troisième arbre (38) et au deuxième arbre (40).

8. Dispositif selon la revendication 9, dans lequel le bras principal (30) a une forme coudée vers l'intérieur de l'aéronef et supporte de façon tournante un quatrième arbre (56) dans sa partie coudée, au moins deux premières courroies sans fin (50,58) cheminant respectivement entre des poulies (52,54) portées par le premier et le quatrième arbres (36,56) et entre des poulies (60) portées par le quatrième et le troisième arbres (56,38).

9. Porte d'aéronef (12) comprenant un dormant (14) lié au fuselage (10) de l'aéronef et un battant (16) articulé sur le dormant par un dispositif d'articulation (20) selon l'une quelconque des revendications précédentes

10. Porte d'aéronef selon la revendication 9, dans laquelle le battant (16) et le dormant (14) comportent des butées complémentaires (24,26) aptes à être en appui mutuel lorsque le battant est dans son état de fermeture, ladite porte comprenant des moyens de verrouillage (22) aptes à commander une descente du battant (16) permettant de décaler vers le bas les butées (24) du battant par rapport à celles (26) du dormant, lors d'un déblocage des moyens de verrouillage (22), préalablement à une ouverture du battant selon ladite trajectoire, et inversement.

## Claims

1. Articulation device (20) for a panel (16) of an aircraft door (12) on a jamb (14) of the said door, the said device comprising a mechanism (28) connecting the jamb (14) to the panel (16), to define a trajectory followed by the said panel, outside the aircraft, when the panel is opened and closed, and means (42) of orientation capable of maintaining an approximately constant orientation of the panel (16) when it is displaced along the said trajectory, **characterized in that** said mechanism (28) defines a trajectory with a variable curvature comprising mainly a first part with a relatively large radius of curvature approximately perpendicular to the panel, including a closed state of the said panel (16), and a second relatively small radius of curvature part approximately parallel to the said panel including a fully open state of the panel (16), approximately parallel to the said panel and **in that** said mechanism (28) comprises a main arm (30) that can be articulated on the jamb (14) by a first axis (A1), at least one secondary arm (32) articulated on the main arm by a second axis (A2) and that can be articulated on the panel (16) by a third axis (A3), and at least one control lever (34) that can be articulated on the jamb by a fourth axis (A4) located close to the first axis (A1) and articulated on the secondary arm by a fifth axis (A5) located close to the second axis (A2).

2. Device according to claim 1, in which the said mechanism (28) defines an approximately elliptical trajectory, in which the major axis is approximately perpendicular to the panel (16).

3. Device according to either of claims 1 and 2, in which the fourth axis (A4) is offset towards the outside of the aircraft with respect to the first axis (A1) and the fifth axis (A5) is offset towards the outside of the aircraft and towards the first axis (A1) with respect to the second axis (A2).

4. Device according to claim 3, in which the offsets between the first and the fourth axes (A1, A4) and between the second and fifth axes (A2, A5) are approximately equal.

5. Device according to claim 4, in which the length of the control lever (34) is less than the length of the main arm (30) by a value approximately equal to the offsets between the first and fourth axes (A1, A4) and between the second and fifth axes (A2, A5).

6. Device according to any one of the claims 1 to 5, in which the orientation means (42) comprise at least one first connecting rod (44), the end of which is fixed to a first hinge pin (36) supporting the main arm (30) about the first axis (A1), and the other end of which can be articulated on the jamb (14), at least one second connecting rod (46), one end of which is fixed to a second hinge pin (40) installed free to rotate on the secondary arm (32) about the third axis (A3) and the other end of which can be articulated on the panel (16), and synchronous connecting means (48) inserted between the first hinge pin (36) and the second hinge pin (40) to keep the angular orientation of the second hinge pin constant.

7. Device according to claim 6, in which the synchronous connecting means (48) comprise at least one first endless belt (50, 58) supported by the main arm (30) and passing between pulleys (52) linked in rotation to the first hinge pin (36) and to a third hinge pin (38) free to rotate about the second axis (A2) respectively, and at least a second endless belt (64) supported by the secondary arm (32) and passing between pulleys (66, 68) linked in rotation to the third hinge pin (38) and the second hinge pin (40), respectively.

8. Device according to claim 7, in which the main arm (30) is cranked towards the inside of the aircraft and supports a fourth hinge pin (56) rotating in its cranked part, at least two first endless belts (50, 58) passing between the pulleys (52, 54) supported by the first and the fourth hinge pins (36, 56) respectively, and between the pulleys (60) supported by the fourth and third hinge pins (56, 38) respectively.

9. Aircraft door (12) comprising a jamb (14) connected to the fuselage (10) of the aircraft and a panel (16) articulated on the jamb by an articulation device (20) according to any one of the preceding claims.

10. Aircraft door according to claim 9, in which the panel (16) and the jamb (14) comprise complementary stops (24, 26) that come into mutual contact when the panel is in its closed state, the said door comprising locking means (22) that control the downwards movement of the panel (16) in order to offset the stops (24) on the panel downwards with respect to the stops (26) on the jamb when the locking means (22) are released, before the panel is opened along the said trajectory, and vice versa.

## Patentansprüche

1. Gelenkverbindungsvorrichtung (20) eines Türblatts (16) einer Luftfahrzeugtür (12) mit einer Zarge (14) der Tür, wobei die Vorrichtung einen die Zarge (14) mit dem Türblatt (16) verbindenden Mechanismus (28) umfasst, um eine von dem Türblatt durchlaufene Bahn außerhalb des Luftfahrzeugs bei dessen Öffnen oder Schließen festzulegen, sowie Ausrichtungsmittel (42), die eine im wesentlichen konstante Ausrichtung des Türblatts (16) während seiner Bewegung auf der Bahn halten können, **dadurch gekennzeichnet, dass** der Mechanismus (28) eine Bahn mit evolutiver Krümmung festlegt, die hauptsächlich einen ersten Abschnitt mit relativ großem Krümmungsradius und im wesentlichen senkrecht zu dem Türblatt (16) einschließlich eines Verschlusszustands des Türblatts sowie einen zweiten Abschnitt mit relativ kleinem Krümmungsradius und im wesentlichen parallel zu dem Türblatt einschließlich eines Zustands vollständiger Öffnung des Türblatts (16) und im wesentlichen parallel zu dem Türblatt umfasst, und dass
der Mechanismus (28) einen Hauptarm (30) umfasst, der mit der Zarge (14) über eine erste Achse (A1) gelenkig verbunden werden kann, mindestens einen Sekundärarm (32), der mit dem Hauptarm über eine zweite Achse (A2) gelenkig verbunden werden kann, und mit dem Türblatt (16) über eine dritte Achse (A3) gelenkig verbunden werden kann, sowie mindestens einen Betätigungshebel (34), der mit der Zarge über eine vierte Achse (A4) gelenkig verbunden werden kann, welche sich in Nähe der ersten Achse (A1) befindet, und mit dem Sekundärarm über eine sich in Nähe der zweiten Achse (A2) befindliche Achse (A5) gelenkig verbunden ist.

2. Vorrichtung nach Anspruch 1, wobei der Mechanismus (28) eine im wesentlichen elliptische Bahn festlegt, von der eine Langachse im wesentlichen senkrecht zum Türblatt (16) ist.

3. Vorrichtung nach einem der Ansprüche 1 oder 2, wobei die vierte Achse (A4) in Bezug auf die erste Achse (A1) vom Luftfahrzeug nach außen versetzt ist, und die fünfte Achse (A5) in Bezug auf die zweite Achse (A2) vom Flugzeug nach außen und zu der ersten Achse (A1) hin versetzt ist.

4. Vorrichtung nach Anspruch 3, wobei die Versätze zwischen der ersten und vierten Achse (A1,A4) und zwischen der zweiten und fünften Achse (A2,A5) im wesentlichen gleich sind.

5. Vorrichtung nach Anspruch 4, wobei der Betätigungshebel (34) eine geringere Länge als die des Hauptarms (30) aufweist, und zwar um eine Größe, die im wesentlichen gleich den Versätzen zwischen der ersten und der vierten Achse (A1,A4) und zwischen der zweiten und der fünften Achse (A2,A5) ist.

6. Vorrichtung nach einem der Ansprüche 1 bis 5, wobei die Ausrichtungsmittel (42) mindestens ein erstes Kurbelteil (44) umfassen, von dem ein Ende mit einer ersten Welle (36) fest verbunden bzw. einstückig ist, welche den Hauptarm (30) um die erste Achse (A1) lagert und von dem das andere Ende mit der Zarge (14) gelenkig verbunden werden kann, mindestens ein zweites Kurbelteil (46), von dem ein Ende mit einer zweiten Welle (40) einstückig bzw. fest verbunden ist, welche an dem Sekundärarm (32) um die dritte Achse (13) drehbar angebracht ist, und von dem das andere Ende mit dem Türblatt (16) gelenkig verbunden werden kann, sowie Synchron-Verbindungsmittel (48), die zwischen die erste Welle (36) und die zweite Welle (40) derart eingefügt sind, dass sie die Winkelausrichtung der zweiten Welle konstant halten.

7. Vorrichtung nach Anspruch 6, wobei die Synchron-Verbindungsmittel (48) mindestens einen ersten Endlosriemen (50,58) aufweisen, der von dem Hauptarm (30) gehaltert wird und zwischen Riemenscheiben (52) verläuft, welche jeweils drehbar mit der ersten Welle (36) und einer dritten Welle (38) verbunden sind, welche um die zweite Achse (A2) herum drehbar angebracht ist, sowie mindestens einem zweiten Endlosriemen (64), der von dem Sekundärarm (32) gehaltert ist und zwischen Riemenscheiben (66,68) verläuft, die jeweils drehbar mit der dritten Welle (38) und der zweiten Welle (40) verbunden sind.

8. Vorrichtung nach Anspruch 7, wobei der Hauptarm (30) eine gekröpfte Form zum Inneren des Luftfahrzeugs hin aufweist und eine vierte Welle (56) in seinem Kröpfungsabschnitt drehbar lagert, wobei mindestens zwei erste Endlosriemen (50,58) jeweils zwischen Riemenscheiben (52,54), welche von der ersten und vierten Welle (36,56) getragen werden, sowie zwischen Riemenscheiben (60), die von der vierten und der dritten Welle (56,38) getragen werden, verlaufen.

9. Luftfahrzeugtür (12) mit einer mit dem Rumpf (10) des Luftfahrzeugs verbundenen Zarge (14) und einem mit der Zarge über eine Gelenkverbindungsvorrichtung (20) gemäß einem der vorangehenden Ansprüche gelenkig verbundenen Türblatt (16).

10. Luftfahrzeugtür nach Anspruch 9, wobei das Türblatt (16) und die Zarge (14) komplementäre Anschläge (24,26) aufweisen, die aneinander anliegen können, wenn sich das Türblatt in seinem Schließzustand befindet, wobei die Tür Verriegelungsmittel (22) umfasst, die ein Absenken des Türblatts (16) steuern können, was eine Verschiebung nach unten der Anschläge (24) des Türblatts in Bezug auf diejenigen (26) der Zarge bei einer Entriegelung der Verriegelungsmittel (22) vor einer Öffnung des Türblatts entlang der genannten Bahn ermöglicht, und umgekehrt.
